# FASCICULE DE BREVET EUROPEEN

(11) **EP 1 077 815 B1**
(45) Date de publication et mention de la délivrance du brevet: **17.07.2002**
(21) Numéro de dépôt: 99919264.4
(22) Date de dépôt: 23.04.1999
(51) Int. Cl.: B60C 9/28, B60C 9/20

(54) **ARMATURE DE SOMMET DE PNEUMATIQUE RADIAL**
VERSTÄRKUNGSGÜRTEL VON RADIALEN REIFEN
RADIAL TYRE BREAKER PLY REINFORCEMENT

(30) Priorité: 11.05.1998 FR 9805999
(43) Date de publication de la demande: 28.02.2001
(73) Titulaire: COMPAGNIE GENERALE DES ETABLISSEMENTS MICHELIN-MICHELIN & CIE, 63040 Clermont-Ferrand Cédex (FR)
(72) Inventeur: CLUZEL, Guy, F-63110 Beaumont (FR)
(74) Mandataire: Le Cam, Stéphane
(86) Numéro de dépôt international: EP9902740
(87) Numéro de publication internationale: WO9958351

(56) Documents cités:
- WO-A-99/24269
- FR-A- 1 275 020
- FR-A- 2 419 185
- FR-A- 2 728 510
- US-A- 3 118 483

## Description

La présente invention concerne un pneumatique à armature de carcasse radiale ancrée de part et d'autre à au moins une tringle de bourrelet et ayant une armature de sommet constituée d'au moins deux nappes dites de travail, superposées et formées de fils ou câbles parallèles dans chaque nappe et croisés d'une nappe à la suivante en faisant avec la direction circonférentielle du pneumatique des angles au plus égaux à 45° en valeur absolue.

Elle concerne plus particulièrement un pneumatique du type "Poids-Lourds", dont le rapport de la hauteur sur jante H sur sa largeur axiale maximale S est au plus égal à 0,80, et destiné à équiper un véhicule de moyen ou fort tonnage, tel que camion, autobus, remorque, etc.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Le brevet FR 2 419 185 enseigne que le type de pneumatique concerné, à rapport H/S faible, bien que présentant de nombreux avantages, comporte aussi un certain nombre d'inconvénients, tel que l'adhérence médiocre de la zone équatoriale de la bande de roulement ou une localisation des pressions élevées dans la région des bords de bande de roulement, dues au raccourcissement de l'aire de contact dans le sens longitudinal du pneumatique. Afin de remédier aux dits inconvénients, le brevet FR cité préconise de disposer entre l'armature de carcasse et la nappe de travail radialement intérieure, dans deux zones distantes du plan équatorial, deux blocs limiteurs constitués chacun de deux nappes superposées de câbles inextensibles, croisés d'une nappe à l'autre en faisant avec la direction circonférentielle des angles opposés, au plus égaux en valeur absolue à la moitié du plus petit angle utilisé dans les nappes de travail, et différents de 0°.

L'application de la solution exposée ci-dessus, son application à un pneumatique de rapport de forme H/S au plus égal à 0,80, en particulier au plus égal à 0,6, et destiné à équiper un véhicule "Poids-Lourds", ne permet pas d'obtenir une endurance satisfaisante de l'armature de sommet.

Le manque d'endurance concerne aussi bien la résistance à la fatigue des nappes de sommet, et en particulier la résistance à la séparation entre extrémités de nappes, que la résistance à la fatigue des câbles de la portion d'armature de carcasse située sous l'armature de sommet, la première insuffisance étant fortement influencée par la température de fonctionnement régnant en bordures des nappes de travail, que ce soit en roulage ligne droite ou en roulage en dérive.

La demande française FR 2 728 510, correspondant au préambule de la revendication 1, a pour objet d'améliorer l'endurance de l'armature de sommet d'un pneumatique "Poids-Lourds", de rapport de forme au plus égal à 0,60, ladite armature comprenant au moins deux nappes de sommet de travail en câbles inextensibles, croisés d'une nappe à la suivante en faisant avec la direction circonférentielle des angles compris entre 10° et 45°, lesdites nappes ayant des largeurs au moins égales à 80 % de la largeur axiale maximale S₀ de l'armature de carcasse. Elle propose de disposer, d'une part entre l'armature de carcasse et la nappe de travail, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle, la largeur axiale de ladite nappe étant au moins égale à 0,7 S₀, et son module d'élasticité à la traction étant au plus égal au module du même nom de la nappe de travail la plus extensible.

Si les problèmes concernant la séparation entre nappes de travail et la résistance à la fatigue des câbles d'armature de carcasse semblent résolus dans un cas, si les températures de fonctionnement sont fortement abaissées dans l'autre cas, par contre les roulages prolongés des pneumatiques ainsi construits font apparaître des ruptures de fatigue des câbles de la nappe additionnelle et plus particulièrement des bords de ladite nappe, que la nappe dite de triangulation soit présente ou non.

Il est toujours possible de changer les éléments de renforcement concernés, et en particulier de choisir des câbles de construction différente ou des câbles de plus forte résistance à la rupture. La solution ci-dessus, certes facile, est toujours onéreuse.

Afin de remédier aux inconvénients ci-dessus et d'améliorer l'endurance de l'armature de sommet du type de pneumatique étudié, la demande française FR 2 770 458, non publiée à la date de dépôt de la présente demande, a proposé un pneumatique à armature de carcasse radiale de largeur axiale maximale S₀, comprenant une armature de sommet formée d'au moins deux nappes de sommet de travail d'éléments de renforcement inextensibles, croisés d'une nappe à l'autre en faisant avec la direction circonférentielle des angles compris entre 10° et 45°, lesdites nappes ayant des largeurs axiales au moins égales à 80 % de la largeur S₀, et, disposée radialement entre lesdites nappes de travail, d'une nappe additionnelle d'éléments de renforcement sensiblement parallèles à la direction circonférentielle, les dites nappes de travail ayant des largeurs supérieures à la largeur de la nappe additionnelle d'au moins 16 % de la largeur S₀, et étant de part et d'autre du plan équatorial et dans le prolongement axial immédiat de la nappe additionnelle couplées sur une distance axiale au moins égale à 3,5 % de la largeur S₀, pour être ensuite découplées par des profilés de mélange de caoutchouc au moins sur le restant de la largeur commune aux dites deux nappes de travail.

Le choix pour éléments de renforcement circonférentiels de la nappe additionnelle des éléments inextensibles, tels que le module d'élasticité sous effort de traction de la dite nappe additionnelle soit avantageusement au plus égal au module du même nom de la nappe de travail la plus extensible,. et de préférence faible pour un allongement relatif compris entre 0 % et 0,4 %, et au plus égal au module d'élasticité à la traction le plus élevé de la nappe de travail la plus extensible, pour les allongements relatifs supérieurs à 0,4 %, ne permet pas d'obtenir le meilleur rapport prix-qualité, l'endurance à la fatigue optimale des éléments circonférentiels nécessitant une densité minimale des éléments en bords de nappe et une résistance à la rupture minimale des dits éléments.

Le but de l'invention est d'améliorer l'endurance de l'armature de sommet du type de pneumatique étudié, sans se trouver confronté à des problèmes de fatigue d'éléments de renforcement. Dans le cadre du couplage des deux nappes de travail radialement de part et d'autre de la nappe additionnelle d'éléments de renforcement, la solution consistant à choisir les dits éléments comme étant circonférentiels ne s'est pas, de manière inattendue, montrée être la meilleure solution.

Le pneumatique P, conforme à l'invention, à armature de carcasse radiale de largeur axiale maximale S₀, comprenant une armature de sommet formée d'au moins deux nappes de sommet de travail d'éléments de renforcement inextensibles, croisés d'une nappe à l'autre en faisant avec la direction circonférentielle des angles compris entre 10° et 45°, lesdites nappes ayant des largeurs axiales L₃₂, L₃₄ au moins égales à 80 % de la largeur S₀, et supérieures d'au moins 16% de la largeur S₀ à la largeur L₃₃ d'une nappe additionnelle d'éléments de renforcement, disposée radialement entre lesdites nappes de travail, les dites nappes de travail étant de part et d'autre du plan équatorial et dans le prolongement axial immédiat de la nappe additionnelle couplées sur une distance axiale 1 au moins égale à 3,5 % de la largeur S₀, pour être ensuite découplées par des profilés de mélange de caoutchouc au moins sur le restant de la largeur commune aux dites deux nappes de travail, est caractérisé en ce que les éléments de renforcement de la nappe additionnelle sont inextensibles et sensiblement radiaux.

L'épaisseur des profilés de découplage entre nappes de travail, mesurée au droit des extrémités de la nappe de travail la moins large, sera au moins égale à deux millimètres, et préférentiellement supérieure à 2,5 mm.

Il faut entendre par nappes couplées des nappes dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

Il faut entendre par élément inextensible un élément, câble ou monofilament, qui a un allongement relatif inférieur à 0,2 % lorsqu'il est soumis à une force de traction égale à 10 % de la charge de rupture. Dans le cas du pneumatique considéré, les éléments de renforcement inextensibles sont préférentiellement des câbles métalliques en acier inextensibles.

Des éléments de renforcement, fils ou câbles, sensiblement radiaux sont des éléments qui font avec la direction circonférentielle des angles compris dans l'intervalle + 85°, - 85° autour de 0°.

Les nappes de travail ont généralement des largeurs axiales inégales. La nappe de travail radialement la plus à l'extérieur peut être moins large axialement que la nappe de travail disposée radialement la plus à l'intérieur : il est alors avantageux que l'armature de sommet soit complétée radialement à l'extérieur par une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail la moins large. Ladite nappe de protection peut avoir une largeur axiale inférieure à la largeur axiale de la nappe de travail la moins large, mais avantageusement suffisante pour recouvrir totalement la zone de couplage entre les deux nappes de sommet de travail, et d'autant plus avantageusement que la bande de roulement du pneumatique considéré comprend une rainure circonférentielle ou quasi-circonférentielle axialement disposée radialement sur la zone de couplage entre les deux nappes de travail. Ladite nappe de protection peut aussi avoir une largeur axiale supérieure à la largeur axiale de la nappe de travail la moins large, telle qu'elle recouvre les bords de la nappe de travail la moins large et telle qu'elle soit couplée, dans le prolongement axial de la nappe additionnelle, avec la nappe de sommet de travail la plus large sur une distance axiale au moins égale à 2 % de la largeur S₀, pour être ensuite, axialement à l'extérieur, découplée de ladite nappe de travail la plus large par des profilés d'épaisseur au moins égale à 2 mm. La nappe de protection formée d'éléments de renforcement élastiques peut, dans le cas cité ci-dessus, être d'une part éventuellement découplée des bords de ladite nappe de travail la moins large par des profilés d'épaisseur sensiblement moindre que l'épaisseur des profilés séparant les bords des deux nappes de travail, et avoir d'autre part une largeur axiale inférieure ou supérieure à la largeur axiale de la nappe de sommet la plus large.

Quelle que soit la solution décrite ci-dessus, l'armature de sommet peut être complétée, radialement à l'intérieur entre l'armature de carcasse et la nappe de travail radialement intérieure la plus proche de ladite armature de carcasse, par une nappe de triangulation d'éléments de renforcement inextensibles faisant, avec la direction circonférentielle, un angle supérieur à 60° et de même sens que celui de l'angle formé par les éléments de renforcement de la nappe radialement la plus proche de l'armature de carcasse. Ladite nappe de triangulation peut avoir une largeur axiale inférieure à ladite nappe de travail la plus large, qui est, dans l'armature de sommet considérée, radialement la plus proche de l'armature de carcasse. Ladite nappe de triangulation peut aussi avoir une largeur axiale supérieure à la largeur de la nappe de travail la plus large, et il est alors avantageux que la nappe radialement à l'extérieur dite de protection, couplée à la nappe de travail la plus large, soit aussi couplée, dans le prolongement axial immédiat de la nappe de travail la plus large, à ladite nappe de triangulation sur une distance axiale d'au moins 0,02 fois la largeur S₀ d'armature de carcasse, pour être ensuite découplée, axialement à l'extérieur, des bords de ladite nappe de triangulation par des profilés d'épaisseur au moins égale à 2 mm. La nappe de protection formée d'éléments de renforcement élastiques peut alors être découplée des bords de ladite nappe de travail la moins large, comme précédemment, par des profilés d'épaisseur sensiblement moindre que l'épaisseur des profilés séparant les bords des deux nappes de travail. Ladite nappe de protection peut aussi être plus large ou moins large que la nappe de triangulation.

La nappe de travail radialement la plus à l'extérieur peut être plus large axialement que la nappe de travail disposée radialement la plus à l'intérieur : il est alors avantageux que l'armature de sommet soit complétée radialement à l'intérieur par une nappe de triangulation d'éléments de renforcement inextensibles faisant, avec la direction circonférentielle, un angle supérieur à 60° de même sens que celui de l'angle des éléments de renforcement de la nappe la moins large (32). La nappe dite de triangulation peut avoir une largeur axiale inférieure à la largeur axiale de la nappe de travail la moins large, c'est-à-dire la nappe radialement la plus proche de l'armature de carcasse. Préférentiellement, ladite nappe de triangulation aura une largeur axiale supérieure à la largeur de la nappe de travail la moins large et une largeur telle qu'elle soit couplée, dans le prolongement axial de la nappe de travail la moins large, avec la nappe de travail la plus large sur une distance axiale d'au moins 0,02 fois la largeur S₀, pour être ensuite découplée des bords de ladite nappe au moyen de profilés de mélange caoutchouteux d'épaisseur au moins égale à 2 mm, et que ce soit la nappe de triangulation ou la nappe de travail la plus large qui ait la plus grande largeur.

Les armatures de sommet qui viennent d'être décrites, avec la nappe de travail radialement la plus éloignée de l'armature de carcasse comme étant axialement la plus large, peut aussi être complétée, radialement à l'extérieur de ladite nappe de travail la plus large, par une nappe de protection d'éléments de renforcement élastiques, orientés par rapport à la direction circonférentielle avec un angle compris entre 10° et 45°, de même sens que celui de l'angle des éléments de la nappe de travail radialement la plus large. Ladite nappe de protection peut avoir une largeur axiale inférieure à la largeur de la nappe de travail la moins large, et recouvrir totalement la zone de couplage entre les deux nappes de sommet de travail. Elle peut être aussi plus large que la nappe de travail la moins large et moins large que la nappe de travail la plus large, mais aura préférentiellement une largeur axiale telle qu'elle recouvre radialement les bords de la nappe de travail la plus large, en étant éventuellement séparés des dits bords par des profilés d'épaisseur pouvant être inférieure à l'épaisseur des profilés séparant les bords de la nappe de travail la moins large de la nappe de travail la plus large, pour ensuite, dans le prolongement axial de la nappe de travail la moins large, être couplée avec la nappe radialement intérieure de triangulation formée d'éléments inextensibles fortement inclinés, sur une largeur axiale au moins égale à 2 % de la largeur S₀, puis découplée des bords de ladite nappe de triangulation par des profilés caoutchouteux d'épaisseur au moins égale à 3 mm, que ce soit la nappe de triangulation ou la nappe de protection qui soit la plus large.

Les caractéristiques et avantages de l'invention seront mieux compris à l'aide de la description qui suit et qui se réfère au dessin, illustrant à titre non limitatif des exemples d'exécution, et sur lequel :
- la figure 1 représente schématiquement, vu en section méridienne, une première variante préférentielle d'armature de sommet conforme à l'invention,
- la figure 2 représente une deuxième variante préférentielle conforme à l'invention,
- la figure 3 représente de la même manière une troisième variante.

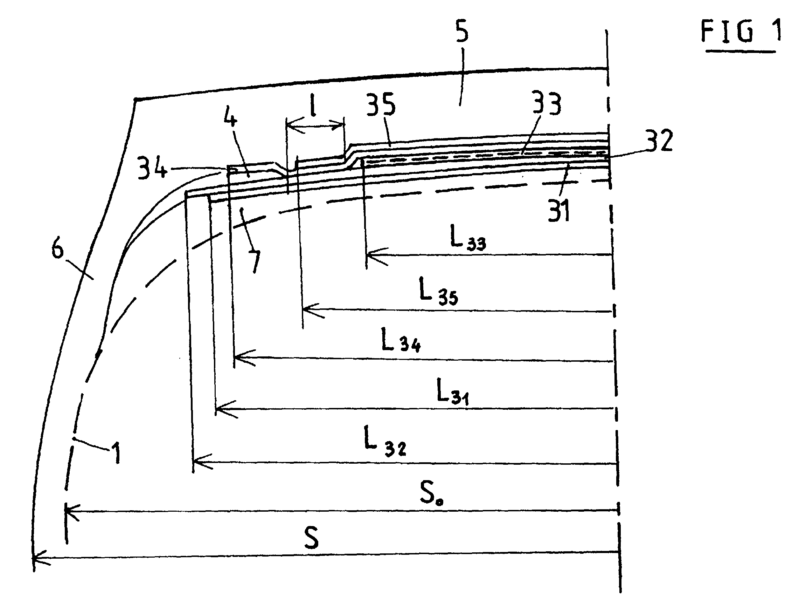

Sur la figure 1, le pneumatique P_{A}, de dimension 495/45 R 22.5 X, a un rapport de forme H/S égal à 0,45, H étant la hauteur du pneumatique P_{A} sur sa jante de montage et S sa largeur axiale maximale. Ledit pneumatique P_{A} comprend une armature de carcasse radiale (1) ancrée dans chaque bourrelet à au moins une tringle en formant un retournement, et formée d'une seule nappe de câbles métalliques. Cette armature de carcasse (1) est frettée par une armature de sommet (3), formée radialement de l'intérieur à l'extérieur :
- une première nappe (31), dite de triangulation, de câbles métalliques inextensibles orientés par rapport à la direction circonférentielle d'un angle δ égal à 65°,
- radialement au dessus et recouvrant la nappe précédente dite de triangulation, d'une première nappe de travail (32) formée de câbles métalliques inextensibles orientés d'un angle α, égal dans le cas montré à 18° et de même sens que l'angle δ des éléments de la nappe de triangulation,
- surmontant la première nappe de travail (32), d'une nappe additionnelle (33) formée de câbles métalliques en acier inextensibles lesdits câbles étant orientés à 90° par rapport à la direction circonférentielle, les bords axialement extérieurs de ladite nappe additionnelle (33) étant séparés de la nappe de sommet de travail (32) par des couches de caoutchouc de faible épaisseur,
- puis d'une deuxième nappe de travail (34) formée de câbles métalliques identiques à ceux de la première nappe de travail (32), et faisant avec la direction circonférentielle un angle β, opposé à l'angle α et, dans le cas montré, égal audit angle α de 18° (mais pouvant être différent dudit angle α),
- et enfin d'une dernière nappe de câbles dits élastiques orientés par rapport à la direction circonférentielle d'un angle γ. de même sens que l'angle β et égal audit angle β (mais pouvant être différent dudit angle), cette dernière nappe étant une nappe de protection.

La largeur axiale L₃₂ de la première nappe de travail (32) est égale à 0,87 fois la largeur axiale maximale S₀ de la fibre moyenne de l'armature de carcasse (1), soit 416 mm, ce qui est, pour un pneumatique de forme usuelle, sensiblement inférieur à la largeur L₁ de la bande de roulement, qui est égale, dans le cas étudié, à 430 mm. La largeur axiale L₃₄ de la deuxième nappe de travail (34) est égale à 0,83 fois la largeur axiale S₀, soit 400 mm. La nappe de triangulation (31) a une largeur axiale L₃₁ intermédiaire entre les largeurs respectives des deux nappes de travail (32, 34) et dans ce cas égale à 408 mm. Quant à la largeur axiale L₃₃ de la nappe additionnelle (33), elle est égale à 320 mm. En fait, la largeur L₃₃ de la nappe additionnelle (33) est inférieure à la largeur L₃₂ (L₃₄) de la nappe de travail la moins large, tout en gardant une largeur suffisante pour contribuer efficacement à la diminution des températures de fonctionnement du pneumatique à proximité des extrémités des nappes de sommet de travail, qui sont les régions les plus pénalisées par l'échauffement et les séparations entre nappes. La dernière nappe de sommet (35), dite de protection, a une largeur L₃₅ sensiblement égale à 370 mm.
Les deux nappes de travail (32) et (34) sont, de chaque côté du plan équatorial et axialement dans le prolongement de la nappe additionnelle (33), couplées sur une largeur axiale 1, égale dans ce cas à 17 mm : les câbles de la première nappe de travail (32) et les câbles de la deuxième nappe de travail (34), sur la largeur axiale 1 de couplage des deux nappes, sont séparés radialement entre eux par une couche de gomme, dont l'épaisseur est minimale et correspond au double de l'épaisseur de la couche caoutchouteuse de calandrage des câbles métalliques 27.23 frettés dont est formée chaque nappe de travail (32, 34), soit 0,8 mm. Sur la largeur restante commune aux deux nappes de travail, c'est-à-dire environ 20 mm de chaque côté, les deux nappes de travail (32) et (34) sont séparés par un profilé (4) de caoutchouc de forme sensiblement triangulaire, l'épaisseur dudit profilé (4) étant croissante en allant de l'extrémité axiale de la zone de couplage à l'extrémité de la nappe de travail la moins large, pour atteindre à ladite extrémité une épaisseur de 4 mm. Ledit profilé (4) a une largeur suffisante pour recouvrir radialement l'extrémité de la nappe de travail (32) la plus large, qui est, dans ce cas la nappe de travail radialement la plus proche de l'armature de carcasse. Le sommet du pneumatique est complété par une bande de roulement (5) réunie aux bourrelets par deux flancs (6) et la nappe de triangulation, radialement adjacente à l'armature de carcasse (1) de part et d'autre du plan équatorial, s'en éloigne en allant axialement vers l'extérieur, ladite nappe étant réunie à l'armature de carcasse (1) au moyen de profilés (7) de caoutchouc à forme triangulaire.

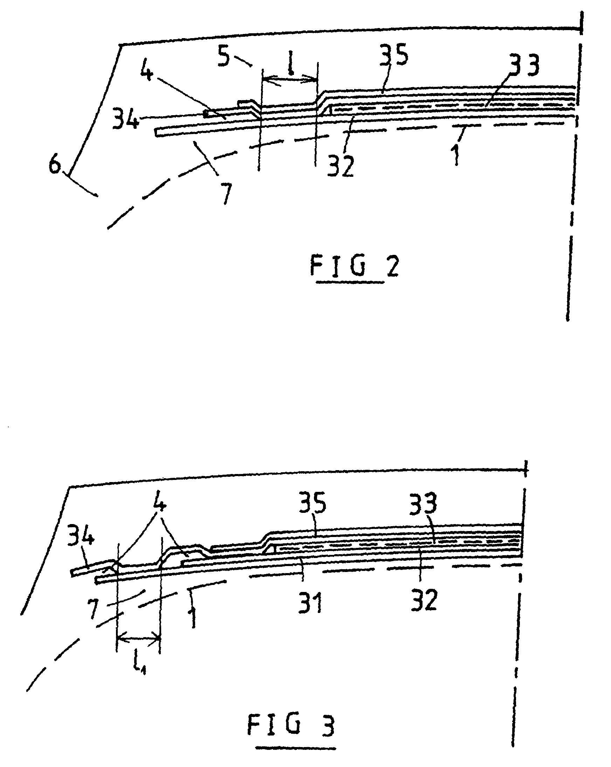

Le pneumatique P_{B} de la figure 2, de dimension 315/80 R 22.5 X, a un rapport de forme H/S égal à 0,8, H étant la hauteur du pneumatique P_{B} sur sa jante de montage et S sa largeur axiale maximale. L'architecture de l'armature de sommet (3) dudit pneumatique P_{B} diffère de celle décrite précédemment par l'absence de nappe dite de triangulation. Ainsi, l'armature de carcasse (1), ancrée dans chaque bourrelet à au moins une tringle en formant un retournement, et formée d'une seule nappe de câbles métalliques, est frettée par une armature de sommet (3), formée radialement de l'intérieur à l'extérieur :
- d'une première nappe de sommet travail (32) formée de câbles métalliques inextensibles en acier, orientés d'un angle α, égal dans le cas montré à 18°, radialement adjacente et parallèle à l'armature de carcasse (1) dans sa partie médiane, dont les bords sont séparés de la dite armature de carcasse par des profilés (7) de caoutchouc d'épaisseur croissante axialement de l'intérieur à l'extérieur,
- surmontant la première nappe de sommet de travail (32), d'une nappe additionnelle (33) formée de câbles métalliques en acier inextensibles, lesdits câbles étant orientés à 90° par rapport à la direction circonférentielle, et les bords axialement extérieurs de ladite nappe additionnelle (33) d'éléments radiaux étant séparés de la première nappe de sommet de travail (32) par des couches de caoutchouc de faible épaisseur,
- puis d'une deuxième nappe de sommet de travail (34) formée de câbles métalliques identiques à ceux de la première nappe (32), et faisant avec la direction circonférentielle un angle β, opposé à l'angle α et, dans le cas montré, égal audit angle α de 18°, (mais pouvant être différent dudit angle α),
- et enfin d'une dernière nappe (35) de câbles métalliques dits élastiques orientés par rapport à la direction circonférentielle d'un angle γ. de même sens que l'angle β et égal audit angle β (mais pouvant être différent dudit angle), cette dernière nappe étant une nappe de protection.

La nappe de protection (35) est surmontée radialement d'une bande de roulement (5) présentant quatre rainures principales circonférentielles, les rainures axialement les plus à l'extérieur étant localisées axialement et radialement au dessus de la zone de couplage de largeur 1 entre les deux nappes de sommet de travail (32) et (34).

La largeur axiale L₃₂ de la première nappe de travail (32) est égale à 235 mm, ce qui est, pour le pneumatique considéré légèrement inférieure à la largeur de la bande de roulement, qui est égale, dans le cas étudié, à 235 mm. La largeur axiale L₃₄ de la deuxième nappe de travail (34) est légèrement inférieure à la largeur L₃₂, puisqu'égale à 210 mm. La largeur axiale L₃₃ de la nappe additionnelle (33) est égale à 176 mm. Les nappes de travail (32) et (34) sont, de chaque côté et de part et d'autre du plan équatorial, dans le prolongement de la nappe additionnelle (33), couplées sur une distance 1 égale à 9 mm, ce qui représente un peu moins de 0,03 fois la largeur axiale maximale de l'armature de carcasse (1), avec la même définition du couplage que dans le cas précédent : épaisseur minimale entre les câbles des nappes et égale dans le cas présent à 1 mm. Sur la largeur restante commune aux deux nappes de travail, c'est-à-dire environ 6 mm de chaque côté, les deux nappes de travail (32) et (34) sont séparés par un profilé (4) de caoutchouc triangulaire ayant une épaisseur de 3,5 mm, mesurée à l'extrémité de la nappe (34) de travail la moins large, l'épaisseur dudit profilé étant croissante en allant de l'extrémité axiale de la zone de couplage à l'extrémité de la nappe de travail la moins large. L'armature de sommet ainsi décrite est complétée par une dernière nappe (35) de câbles en acier dits élastiques, orientés par rapport à la direction circonférentielle d'un angle γ de même sens que l'angle β et égal audit angle β, (mais pouvant être différent), cette dernière nappe (35) étant une nappe dite de protection, et des câbles dits élastiques étant, comme dans le premier exemple décrit, des câbles ayant à la rupture un allongement relatif au moins égal à 4 %. La largeur axiale L₃₅ de ladite nappe (35) est sensiblement égale à 198 mm, de manière à recouvrir les zones de couplage entre les deux nappes de travail (32) et (34).

Les exemples décrits et montrés sur les figures 1 et 2 concernent une seule zone de couplage entre nappes. Le pneumatique P_{C}, montré sur la figure 3, de même dimension que celle du pneumatique décrit dans le premier exemple, concerne deux zones de couplage entre nappes. L'architecture de l'armature de sommet (3) dudit pneumatique P_{C} diffère de celle du pneumatique P_{A} :
- d'une part par l'inversion des largeurs axiales des deux nappes de travail (32) et (34),
- d'autre part par la modification des largeurs de nappes, de travail (32) et (34) et de triangulation (31), la nappe additionnelle (33) conservant la même largeur de 320 mm, la largeur L₃₂ de la nappe de travail radialement intérieure (32) devenant égale à 380 mm, la largeur L₃₄ de la nappe de travail radialement extérieure (34) devenant égale à 451 mm, de manière à ce que la nappe de triangulation (31) de largeur L₃₁ égale à 431 mm soit couplée, de chaque côté du plan équatorial, avec la deuxième nappe de travail (34) dans le prolongement axial de la première nappe de travail (32), sur une largeur l₂ sensiblement égale à 10 mm, les bords de ladite nappe de triangulation (31) étant ensuite découplés de la nappe de travail la plus large (34) par des profilés (4) de 3,5 mm d'épaisseur. Ladite variante préférentielle permet en particulier d'améliorer la résistance à la séparation entre les bords de nappes de travail au niveau de la nappe la moins large (32).

## Revendications

1. Pneumatique P à armature de carcasse radiale (1) de largeur axiale maximale S₀, comprenant une armature de sommet (3) formée d'au moins deux nappes de sommet de travail (32, 34) d'éléments de renforcement inextensibles, croisés d'une nappe à l'autre en faisant avec la direction circonférentielle des angles compris entre 10° et 45°, lesdites nappes ayant des largeurs axiales L₃₂, L₃₄ au moins égales à 80 % de la largeur S₀, et supérieures d'au moins 16% de la largeur S₀ à la largeur L₃₃ d'une nappe additionnelle (33) d'éléments de renforcement, disposée radialement entre lesdites nappes de travail, les dites nappes de travail (32, 34) étant de part et d'autre du plan équatorial et dans le prolongement axial immédiat de la nappe additionnelle (33) couplées sur une distance axiale 1 au moins égale à 3,5 % de la largeur S₀, pour être ensuite découplées par des profilés de mélange de caoutchouc au moins sur le restant de la largeur commune aux dites deux nappes de travail (32, 34), **caractérisé en ce que** les éléments de renforcement de la nappe additionnelle (33) sont métalliques, inextensibles et sensiblement radiaux.

2. Pneumatique selon la revendication 1, **caractérisé en ce que** les profilés (4) ont, au niveau des extrémités de la nappe de travail (32, 34) la moins large, une épaisseur au moins égale à 2 mm.

3. Pneumatique selon la revendication 2, **caractérisé en ce que** l'armature de sommet (3), dont les nappes de travail (32,34) ont des largeurs axiales inégales, la nappe de travail (34) radialement à l'extérieur étant moins large axialement que la nappe de travail (32) disposée radialement à l'intérieur, comprend aussi, radialement à l'extérieur, une nappe (35) d'éléments de renforcement élastiques, orientés par rapport à la direction circonférentielle avec un angle compris entre 10° et 45°, et de même sens que l'angle formé par les éléments inextensibles de la nappe de travail la moins large (34), ladite nappe de protection (35) ayant une largeur axiale L₃₅ inférieure à la largeur axiale L₃₄ de la nappe de travail (34) la moins large.

4. Pneumatique selon la revendication 2, **caractérisé en ce que** l'armature de sommet (3), dont les nappes de travail (32, 34) ont des largeurs axiales inégales, la nappe de travail (34) radialement à l'extérieur étant moins large axialement que la nappe de travail (32) disposée radialement à l'intérieur, comprend aussi, radialement à l'extérieur, une nappe (35) d'éléments de renforcement élastiques, orientés par rapport à la direction circonférentielle avec un angle compris entre 10° et 45°, et de même sens que l'angle formé par les éléments inextensibles de la nappe de travail la moins large (34), ladite nappe (35) ayant une largeur axiale L₃₅ telle qu'elle recouvre radialement les bords de la nappe de travail (34) la moins large, et qu'elle soit ensuite, dans le prolongement axial de la nappe additionnelle, couplée avec la nappe de sommet de travail (32) la plus large, sur une distance axiale au moins égale à 2 % de la largeur S₀, pour être ensuite, axialement à l'extérieur, séparée de ladite nappe de travail la plus large (32) par des profilés (4) d'épaisseur au moins égale à 2 mm.

5. Pneumatique selon la revendication 4, **caractérisé en ce que** la nappe de protection (35) formée d'éléments de renforcement élastiques est découplée des bords de ladite nappe de travail la moins large (32) par des profilés d'épaisseur sensiblement moindre que l'épaisseur des profilés (4) séparant les bords des deux nappes de travail (32, 34).

6. Pneumatique selon l'une des revendications 1 à 5, **caractérisé en ce que** l'armature de sommet (3) comprend en outre, radialement à l'intérieur, entre l'armature de carcasse (1) et la nappe de travail radialement intérieure (32), une nappe (31) d'éléments de renforcement inextensibles faisant avec la direction circonférentielle un angle supérieur à 60°, de même sens que l'angle des éléments de renforcement de la nappe de travail (32), et de largeur axiale L₃₁ inférieure à la largeur axiale L₃₂ de la nappe de travail (32) la plus large.

7. Pneumatique selon la revendication 5, **caractérisé en ce que** l'armature de sommet (3) comprend en outre, radialement à l'intérieur, entre l'armature de carcasse (1) et la nappe de travail radialement intérieure (32), une nappe (31) d'éléments de renforcement inextensibles faisant avec la direction circonférentielle un angle supérieur à 60°, de même sens que l'angle des éléments de renforcement de la nappe de travail (32), et de largeur axiale L₃₁ supérieure à la largeur de la nappe de travail la plus large, la nappe de protection (35), couplée à la nappe de travail (32) la plus large, ayant une largeur L₃₅ telle qu'elle soit aussi couplée, dans le prolongement axial immédiat de la nappe de travail (32) la plus large, à ladite nappe (31) de triangulation sur une distance axiale 1" d'au moins 0,02 fois la largeur S₀ d'armature de carcasse (1), pour être ensuite découplée, axialement à l'extérieur, des bords de ladite nappe de triangulation (31) par des profilés (4) d'épaisseur au moins égale à 2 mm.

8. Pneumatique selon le revendication 2, **caractérisé en ce que** l'armature de sommet (3), dont les nappes de travail (32,34) ont des largeurs axiales inégales, la nappe de travail (34) radialement la plus à l'extérieur étant plus large axialement que la nappe de travail (32) disposée radialement la plus à l'intérieur, comprend aussi une nappe (31) d'éléments de renforcement inextensibles faisant avec la direction circonférentielle un angle supérieur à 60°, de même sens que l'angle des éléments de renforcement de la nappe la moins large (32), et dont la largeur axiale L₃₁ est inférieure à la largeur L₃₂ de la nappe (32) la moins large.

9. Pneumatique selon la revendication 2, **caractérisé en ce que** l'armature de sommet (3), dont les nappes de travail (32,34) ont des largeurs axiales inégales, la nappe de travail (34) radialement la plus à l'extérieur étant plus large axialement que la nappe de travail (32) disposée radialement la plus à l'intérieur, comprend aussi une nappe de triangulation (31), d'éléments de renforcement inextensibles faisant avec la direction circonférentielle un angle supérieur à 60° et de même sens que l'angle des éléments de renforcement de la nappe la moins large (32), et de largeur L₃₁ supérieure à la largeur L₃₂ de la nappe de travail (32) la moins large, la nappe de travail (34) de plus grande largeur L₃₄ étant, dans le prolongement immédiat de la nappe de travail (32), couplée avec la nappe (31) de triangulation, sur une distance axiale I₁ d'au moins 0,02 fois la largeur S₀ d'armature de carcasse (1), pour être ensuite découplée des bords de ladite nappe de triangulation (31) au moyen de profilés de mélange caoutchouteux d'épaisseur au moins égale à 2 mm.

10. Pneumatique selon l'une des revendications 8 à 9, **caractérisé en ce que** l'armature de sommet (3) comprend, radialement à l'extérieur de la nappe de travail (34) la plus large, une nappe de protection (35) d'éléments de renforcement élastiques, orientés par rapport à la direction circonférentielle avec un angle compris entre 10° et 45°, et de même sens que l'angle formé par les éléments inextensibles de la nappe de travail la plus large (34).

11. Pneumatique selon la revendication 10, **caractérisé en ce que** l'armature de sommet (3) comprend, radialement à l'extérieur de la nappe de travail (34) la plus large, une nappe de protection (35) d'éléments de renforcement élastiques, orientés par rapport à la direction circonférentielle avec un angle compris entre 10° et 45°, et de même sens que l'angle formé par les éléments inextensibles de la nappe de travail la plus large (34), ladite nappe (35) ayant une largeur axiale L₃₅ telle qu'elle recouvre radialement les extrémités de la nappe de travail (34) la plus large et qu'elle soit, dans le prolongement immédiat de la nappe de travail (32) la moins large, couplée avec la nappe radialement intérieure (31) d'éléments inextensibles fortement inclinés sur une largeur axiale l₂ au moins égale à 2 % de la largeur S₀, puis découplée des bords de ladite nappe de triangulation par des profilés caoutchouteux d'épaisseur au moins égale à 3 mm.

## Patentansprüche

1. Luftreifen P mit radialer Karkassenbewehrung (1) mit axialer Maximalbreite S₀, mit einer Scheitelbewehrung (3), die aus mindestens zwei Scheitel-Arbeitslagen (34, 34) aus undehnbaren Verstärkungselementen gebildet ist, die von einer Lage zur anderen überkreuz laufen, unter Bildung von Winkeln zur Umfangsrichtung, die zwischen 10° und 45° liegen, wobei die genannten Lagen Breiten L₃₂, L₃₄ aufweisen, die mindestens gleich 80% der axialen Breite S₀ betragen und um mindestens 16% der Breite S₀ größer sind als die Breite L₃₃ einer zusätzlichen Lage (33) aus Verstärkungselementen, die radial zwischen den genannten Arbeitslagen angeordnet ist, wobei sich die genannten Arbeitslagen (32, 34) beiderseits der Äquatorialebene und in der axialen, unmittelbaren Verlängerung der zusätzlichen Lage (33) befinden, die über eine axiale Strecke l gekoppelt sind, die mindestens gleich 3,5% der Breite Sₒ beträgt, um dann durch Profile aus Gummimischung mindestens über den Rest der Breite entkoppelt zu sein, die den genannten Arbeitslagen (32, 34) gemeinsam ist, **dadurch gekennzeichnet, daß** die Verstärkungselemente der zusätzlichen Lage (33) aus Metall sind, undehnbar sind und im wesentlichen radial sind.

2. Reifen nach Anspruch 1, dadurch gesehen, daß die Profile (4) auf Höhe der Enden der am wenigsten breiten Arbeitslage (32, 34) eine Dicke haben, die mindestens 2 mm beträgt.

3. Reifen nach Anspruch 2, **dadurch gekennzeichnet, daß** die Scheitelbewehrung (3), deren Arbeitslagen (32, 34) ungleiche Breiten haben, wobei die radial außenliegende Arbeitslage (34) axial weniger breit ist als die radial auf der Innenseite angeordnete Arbeitslage (32), auch radial auf der Außenseite eine Lage (35) aus elastischen Verstärkungselementen aufweist, die bezüglich der Umfangsrichtung mit einem Winkel ausgerichtet sind, der zwischen 10° und 45° liegt, und in derselben Richtung wie der Winkel, der durch die undehnbaren Elementen der am wenigsten breiten Arbeitslage (34) gebildet ist, wobei die genannte Schutzlage (35) eine axiale Breite L₃₅ aufweist, die kleiner ist als die axiale Breite L₃₄ der am wenigsten breiten Arbeitslage (34).

4. Reifen nach Anspruch 2, **dadurch gekennzeichnet, daß** die Scheitelbewehrung (3), deren Arbeitslagen (32, 34) ungleiche Breiten haben, wobei die radial außenliegende Arbeitslage (34) axial weniger breit ist als die radial auf der Innenseite angeordnete Arbeitslage (32), auch radial auf der Außenseite eine Lage (35) aus elastischen Verstärkungselementen aufweist, die bezüglich der Umfangsrichtung mit einem Winkel ausgerichtet sind, der zwischen 10° und 45° liegt, und in derselben Richtung wie der Winkel, der durch die undehnbaren Elemente der am wenigsten breiten Arbeitslage (34) gebildet ist, wobei die genannte Schutzlage (35) eine solche axiale Breite L₃₅ aufweist, daß sie radial die Ränder der am wenigsten breiten Arbeitslage (34) abdeckt, und daß sie nachfolgend in der axialen Verlängerung der zusätzlichen Lage mit der breitesten Scheitel-Arbeitslage (32) über eine axiale Strecke gekoppelt ist, die mindestens 2% der Breite Sₒ beträgt, um nachfolgend axial auf der Außenseite von der genannten, breitesten Arbeitslage (32) durch Profile (4) mit einer Dicke getrennt zu sein, die mindestens 2 mm beträgt.

5. Reifen nach Anspruch 4, **dadurch gekennzeichnet, daß** die aus elastischen Verstärkungselementen gebildete Schutzlage (35) von den Rändern der genannten, am wenigsten breiten Arbeitslage (32) durch Profile mit einer Dicke entkoppelt ist, die deutlich geringer ist als die Dicke der Profile (4), die die Ränder der beiden Arbeitslagen (32, 34) trennen.

6. Reifen nach einem der Ansprüche 1 bis 5, **dadurch gekennzeichnet, daß** die Scheitelbewehrung (3) außerdem radial auf der Innenseite zwischen der Karkassenbewehrung (1) und der radial inneren Arbeitslage (32) eine Lage (31) aus undehnbaren Verstärkungselementen aufweist, die mit der Umfangsrichtung einen Winkel von mehr als 60° bilden, in derselben Richtung wie der Winkel der Verstärkungselemente der Arbeitslage (32) und mit einer axialen Breite L₃₁, die kleiner ist als die axiale Breite L₃₂ der breitesten Arbeitslage (32).

7. Reifen nach Anspruch 5, **dadurch gekennzeichnet, daß** die Scheitelbewehrung (3) außerdem radial auf der Innenseite zwischen der Karkassenbewehrung (1) und der radial inneren Arbeitslage (32) eine Lage (31) aus undehnbaren Verstärkungselementen aufweist, die zur Umfangsrichtung einen Winkel von mehr als 60° bilden, in derselben Richtung wie der Winkel der Verstärkungselemente der Arbeitslage (32), und mit einer axialen Breite L₃₁, die größer ist als die Breite der breitesten Arbeitslage, wobei die Schutzlage (35), die mit der breitesten Arbeitslage (32) gekoppelt ist, eine solche Breite L₃₅ aufweist, daß sie auch in der unmittelbaren axialen Verlängerung der breitesten Arbeitslage (32) mit der genannten Triangulationslage (31) über eine axiale Strecke l" von mindestens dem 0,02-fachen der Breite S₀ der Karkassenbewehrung (1) gekoppelt ist, um nachfolgend axial auf der Aussenseite von den Rändern der genannten Triangulationslage (31) durch Profile (4) mit einer Dicke von mindestens 2 mm entkoppelt zu sein.

8. Reifen nach Anspruch 2, **dadurch gekennzeichnet, daß** die Scheitelbewehrung (3), deren Arbeitslagen (32, 34) ungleiche axiale Breiten haben, wobei die radial am weitesten außenliegende Arbeitslage (34) axial breiter ist als die Arbeitslage (32), die radial am weitesten innenliegt, auch eine Lage (31) aus undehnbaren Verstärkungselementen aufweist, die mit der Umfangsrichtung einen Winkel von mehr als 60° bilden, in derselben Richtung wie der Winkel der Verstärkungselemente der am wenigsten breiten Lage (32), und deren axiale Breite L₃₁ kleiner ist als die Breite L₃₂ der am wenigsten breiten Lage (32).

9. Reifen nach Anspruch 2 **dadurch gekennzeichnet, daß** die Scheitelbewehrung (3), deren Arbeitslagen (32, 34) ungleiche axiale Breiten haben, wobei die radial am weitesten außenliegende Arbeitslage (34) axial breiter ist als die Arbeitslage (32), die radial am weitesten innenliegt, auch eine Triangulationslage (31) aus undehnbaren Verstärkungselementen aufweist, die mit der Umfangsrichtung einen Winkel von mehr als 60° bilden, in derselben Richtung wie der Winkel der Verstärkungselemente der am wenigsten breiten Lage (32), und mit einer Breite L₃₁, die größer ist als die Breite L₃₂ der am wenigsten breiten Arbeitslage (32), wobei die Arbeitslage (34) mit der größten Breite L₃₄ in der unmittelbaren Verlängerung der Arbeitslage (32) mit der Triangulationslage (31) über einen axialen Abstand l₁ von mindestens dem 0,02-fachen der Breite S0 der Karkassenbewehrung (1) gekoppelt ist, um nachfolgend axial auf der Außenseite von den Rändern der genannten Triangulationslage (31) durch Profile (4) mit einer Dicke von mindestens 2 mm entkoppelt zu sein.

10. Reifen nach einem der Ansprüche 8 bis 9, **dadurch gekennzeichnet, daß** die Scheitelbewehrung (3) radial auf der Außenseite der breitesten Arbeitslage (34) eine Schutzlage (35) aus elastischen Verstärkungselementen aufweist, die im Verhältnis zur Umfangsrichtung mit einem Winkel ausgerichet sind, der zwischen 10° und 45° liegt, und in der selben Richtung wie der Winkel, der von den undehnbaren Elementen der breitesten Arbeitslage (34) gebildet ist.

11. Reifen nach Anspruch 10, **dadurch gekennzeichnet, daß** die Scheitelbewehrung (3) radial auf der Außenseite der breitesten Arbeitslage (34) eine Schutzlage (35) aus elastischen Verstärkungselementen aufweist, die in Bezug auf die Umfangsrichtung mit einem Winkel ausgerichtet sind, der zwischen 10° und 45° liegt, und mit derselben Richtung wie der Winkel, der durch die undehnbaren Elemente der breitesten Arbeitslage (34) gebildet ist, wobei die genannte Lage (35) eine solche axiale Breite L₃₅ aufweist, daß sie radial die Enden der breitesten Arbeitlage (34) abdeckt, und daß sie in der unmittelbaren Verlängerung der am wenigsten breiten Arbeitslage (32) mit der radial inneren Lage (31) aus undehnbaren, stark geneigten Elementen über eine axiale Breite 1₂ von mindestens 2% der Breite S₀ gekoppelt ist und dann von den Rändern der genannten Triangulationslage durch gummihaltige Profile mit einer Dicke von mindestens 3 mm entkoppelt ist.

## Claims

1. A tyre P with a radial carcass reinforcement (1) of maximum axial width S₀, comprising a crown reinforcement (3) formed of at least two working crown plies (32, 34) of inextensible reinforcement elements, crossed from one ply to the other, forming angles of between 10° and 45° with the circumferential direction, said plies having axial widths L₃₂, L₃₄ at least equal to 80% of the width S₀, and greater by at least 16% of the width S₀ than the width L₃₃ of an additional ply (33) of reinforcement elements, which is arranged radially between said working plies, said working plies (32, 34) being, on either side of the equatorial plane and in the immediate axial extension of the additional ply (33), coupled over an axial distance I at least equal to 3.5% of the width S₀, then being decoupled by profiled members of rubber mix at least over the remainder of the width common to said two working plies (32, 34), **characterised in that** the reinforcement elements of the additional ply (33) are metallic, inextensible and substantially radial.

2. A tyre according to Claim 1, **characterised in that** the profiled members (4) have a thickness of at least 2 mm at the ends of the least wide working ply (32, 34).

3. A tyre according to Claim 2, **characterised in that** the crown reinforcement (3), the working plies (32, 34) of which are of unequal axial widths, the working ply (34) radially to the outside being less wide axially than the working ply (32) arranged radially to the inside, also comprises, radially to the outside, a ply (35) of elastic reinforcement elements, which are oriented relative to the circumferential direction at an angle of between 10° and 45° and of the same direction as the angle formed by the inextensible elements of the least wide working ply (34), said protective ply (35) having an axial width L₃₅ less than the axial width L₃₄ of the least wide working ply (34).

4. A tyre according to Claim 2, **characterised in that** the crown reinforcement (3), the working plies (32, 34) of which are of unequal axial widths, the working ply (34) radially to the outside being less wide axially than the working ply (32) arranged radially to the inside, also comprises, radially to the outside, a ply (35) of elastic reinforcement elements, which are oriented relative to the circumferential direction at an angle of between 10° and 45° and of the same direction as the angle formed by the inextensible elements of the least wide working ply (34), said ply (35) having an axial width L₃₅ such that it radially covers the edges of the least wide working ply (34) and such that it is then coupled, in the axial extension of the additional ply, with the widest working crown ply (32) over an axial distance of at least 2% of the width S₀, then being separated, axially to the outside, from said widest working ply (32) by profiled members (4) of a thickness of at least 2 mm.

5. A tyre according to Claim 4, **characterised in that** the protective ply (35) formed of elastic reinforcement elements is decoupled from the edges of said least wide working ply (32) by profiled members of a substantially lesser thickness than the thickness of the profiled members (4) separating the edges of the two working plies (32, 34).

6. A tyre according to one of Claims 1 to 5, **characterised in that** the crown reinforcement (3) furthermore comprises, radially to the inside, between the carcass reinforcement (1) and the radially inner working ply (32), a ply (31) of inextensible reinforcement elements, forming with the circumferential direction an angle greater than 60° of the same direction as the angle of the reinforcement elements of the working ply (32), and of axial width L₃₁ less than the axial width L₃₂ of the widest working ply (32).

7. A tyre according to Claim 5, **characterised in that** the crown reinforcement (3) furthermore comprises, radially to the inside, between the carcass reinforcement (1) and the radially inner working ply (32), a ply (31) of inextensible reinforcement elements forming with the circumferential direction an angle greater than 60°, of the same direction as the angle of the reinforcement elements of the working ply (32), and of axial width L₃₁ greater than the width of the widest working ply, the protective ply (35), coupled to the widest working ply (32), having a width L₃₅ such that it is also coupled, in the immediate axial extension of the widest working ply (32), to said triangulation ply (31) over an axial distance I" of at least 0.02 times the width S₀ of the carcass reinforcement (1), then being decoupled, axially to the outside, from the edges of said triangulation ply (31) by profiled members (4) of a thickness of at least 2 mm.

8. A tyre according to Claim 2, **characterised in that** the crown reinforcement (3), the working plies (32, 34) of which are of unequal axial widths, the radially outermost working ply (34) being wider axially than the radially innermost working ply (32), also comprises a ply (31) of inextensible reinforcement elements, forming with the circumferential direction an angle greater than 60°, of the same direction as the angle of the reinforcement elements of the least wide ply (32), and the axial width L₃₁ of which is less than the width L₃₂ of the least wide ply (32).

9. A tyre according to Claim 2, **characterised in that** the crown reinforcement (3), the working plies (32, 34) of which are of unequal axial widths, the radially outermost working ply (34) being wider axially than the radially innermost working ply (32), also comprises a triangulation ply (31) of inextensible reinforcement elements forming with the circumferential direction an angle greater than 60° and of the same direction as the angle of the reinforcement elements of the least wide ply (32), and of a width L₃₁ greater than the width L₃₂ of the least wide working ply (32), the working ply (34) of greater width L₃₄ being coupled, in the immediate extension of the working ply (32), with the triangulation ply (31) over an axial distance I₁ of at least 0.02 times the width S₀ of the carcass reinforcement (1), then being decoupled from the edges of said triangulation ply (31) by means of profiled members of rubber mix of a thickness of at least 2 mm.

10. A tyre according to one of Claims 8 to 9, **characterised in that** the crown reinforcement (3) comprises, radially to the outside of the widest working ply (34), a protective ply (35) of elastic reinforcement elements, oriented relative to the circumferential direction at an angle of between 10° and 45° and of the same direction as the angle formed by the inextensible elements of the widest working ply (34).

11. A tyre according to Claim 10, **characterised in that** the crown reinforcement (3) comprises, radially to the outside of the widest working ply (34), a protective ply (35) of elastic reinforcement elements, which are oriented at an angle of between 10° and 45° relative to the circumferential direction, of the same direction as the angle formed by the inextensible elements of the widest working ply (34), said ply (35) having an axial width L₃₅ such that it radially covers the ends of the widest working ply (34) and that, in the immediate extension of the least wide working ply (32), it is coupled with the radially inner ply (31) of greatly inclined inextensible elements, over an axial width I₂ at least equal to 2% of the width S₀, then decoupled from the edges of said triangulation ply by rubber profiled members of a thickness of at least 3 mm.
